Europäisches Patentamt

European Patent Office

Office européen des brevets

(11) Veröffentlichungsnummer: **0 396 816 B1**

(19)

## (12) EUROPÄISCHE PATENTSCHRIFT

(45) Veröffentlichungstag der Patentschrift: **02.02.94**

(51) Int. Cl.⁵: **H04Q 3/68**

(21) Anmeldenummer: **89117053.2**

(22) Anmeldetag: **14.09.89**

(54) **Mehrstufige Koppeleinrichtung.**

(30) Priorität: **12.05.89 DE 8905982 U**

(43) Veröffentlichungstag der Anmeldung:
**14.11.90 Patentblatt 90/46**

(45) Bekanntmachung des Hinweises auf die
Patenterteilung:
**02.02.94 Patentblatt 94/05**

(84) Benannte Vertragsstaaten:
**AT BE CH DE ES FR GB GR IT LI NL SE**

(56) Entgegenhaltungen:
**EP-A- 0 171 231
EP-A- 0 280 090
DE-A- 3 640 849
GB-A- 2 202 712**

**THE BELL SYSTEM TECHNICAL JOURNAL,
Band 41, Nr. 4, Juli 1962, Seiten 1201-1247;
V.E. BENES: "Heuristic remarks and mathematical problems regarding the theory of
connecting systems"**

**PATENT ABSTRACTS OF JAPAN, Band 13,
Nr. 268 (E-775)[3616], 20. Juni 1989 & JP-A-1
58 197**

**PATENT ABSTRACTS OF JAPAN, Band 13,**

**Nr. 272 (E-777)[3620], 22. Juni 1989 & JP-A-1
61 194**

**PROCEEDINGS OF THE 11TH INTERNATIO-
NAL TELETRACCIC CONGRESS, 4. - 11. September 1985, Seiten 1061-1068, Kyoto, JP; A.
JAJSZCZYK: "Design of switching network
composed of uniform time-space elements"**

(73) Patentinhaber: **SIEMENS AKTIENGESELL-
SCHAFT
Wittelsbacherplatz 2
D-80333 München(DE)**

(72) Erfinder: **Muhr, Johann
Eduard-Schmid-Strasse 43
D-8000 München 90(DE)**

EP 0 396 816 B1

## Beschreibung

Die Erfindung betrifft eine mehrstufige Koppeleinrichtung nach dem Überbegriff des Anspruchs 1.

Die Hauptaufgabe der Vermittlungstechnik ist das Koppeln von Eingängen mit Ausgängen. In der Kanal- oder Durchschaltevermittlung erfolgt das Verbinden von Eingängen mit Ausgängen durch eine Koppeleinrichtung, die von einem Vermittlungsrechner gesteuert wird. Als Kontakte werden sowohl elektromechanische Bauteile als auch in zunehmendem Maße elektronische Schalter verwendet. Je nach Ausführungsart der Koppeleinrichtung können Signale über dieselben Koppelpunkte in einer oder in beiden Richtungen übertragen werden. Neben dem üblichen Raummultiplexbetrieb von Koppeleinrichtungen ist es auch möglich, Koppeleinrichtungen nach dem Zeitmultiplexprinzip zu realisieren oder beide Prinzipien zu kombinieren.

Koppeleinrichtungen werden meist aus einheitlichen Grundbausteinen nach bestimmten Prinzipien aufgebaut. Als besonders vorteilhaft hat sich die mehrstufige Clossche Koppelanordnung erwiesen, die in dem Buch "Neue Kommunikationsnetze" von Peter R. Gerke, Springer Verlag, 1982 in dem Kapitel Koppeleinrichtungen auf den Seiten 50 und 51 beschrieben ist und in dem Aufsatz von C.Clos in Bell System Technical Journal 32 (1953), Seiten 406-424 ausführlich behandelt wird. Die Clossche Koppelanordnung enthält 3 Koppelfeldstufen, wobei die Koppler der äußeren Stufen es ermöglichen, jede der Leitungen auf die doppelte Anzahl von Zwischenleitungen (genauer: eine weniger als die doppelte Anzahl) durchzuschalten, die mit Kopplern der mittleren Stufe verbunden sind. Zwischen jedem der Koppler der äußeren und der mittleren Stufe verläuft jeweils eine Zwischenleitung. Bei größeren Koppeleinrichtungen bedeutet diese Art der Verdrahtung jedoch einen kaum lösbaren Aufwand.

Aufgabe der Erfindung ist es, ein Koppelfeld anzugeben, daß eine einfachere Verdrahtung zwischen den Koppelfeldstufen ermöglicht.

Die Koppeleinrichtung soll außerdem erweiterbar sein.

Die Hauptaufgabe wird durch die im Anspruch 1 angegebenen Merkmale gelöst.

Der besondere Vorteil liegt im übersichtlichen Aufbau des Koppelfeldes. Alle Koppeleinheiten sind gleich aufgebaut. Anstelle von einzelnen Zwischenleitungen können jetzt Busleitungen oder Kabel verwendet werden, die die Koppeleinheiten miteinander verbinden. Hierdurch verringert sich die Anzahl der Verbindungen entsprechend der Anzahl der Leitungen je Bus oder Kabel erheblich. Durch steckbare Verbindungskabel wird die Verdrahtung wesentlich vereinfacht. Die Verbindungskabel können selbstverständlich mit codierten Steckern versehen werden, die die Verdrahtung erleichtern oder eine falsche Verdrahtung unmöglich machen. Prinzipiell ist natürlich auch eine gedruckte Verdrahtung zwischen den Koppeleinheiten möglich. Diese wird durch die parallel verlaufenden Leitungen eines entsprechenden gedruckten Verbindungskabels wesentlich erleichtert.

Es ist zweckmäßig, wenn ein n/2n-Raumkoppler bzw. 2n/n-Raumkoppler mit einer elektrischen Schnittstelle, die neben einer Schaltung zur Anpassung zwischen den Signalen auf den Anschlußleitungen und denen der Raumkoppler auch Einrichtungen für den Zeitmultiplexbetrieb enthalten kann, zu einer Schnittstelleneinheit zusammengefaßt wird. Hierdurch wird die Verdrahtung zwischen der Schnittstellenbaugruppe und dem n/2n-Raumkoppler gespart.

Besonders vorteilhaft ist, daß eine unterbrechungsfreie Erweiterung der Koppeleinrichtung möglich ist. Diese kann durch weitere Schnittstelleneinheiten erfolgen, wenn die Koppeleinrichtungen für den Endausbau vorgerüstet wurden. Die Koppeleinrichtungen können auch durch gegebenenfalls mehrfache Quadrierung erweitert und durch die entsprechenden Schnittstelleneinheiten ergänzt werden.

Als besonders vorteilhaft erweist sich die Verwendung von Koppeleinheiten, die acht x/x-Raumkoppler enthalten, wobei jeder Raumkoppler 32 Eingänge und 32 Ausgänge aufweist. Je nach verwendeter Technologie erfolgt die Durchschaltung von Signalen nur in einer Richtung oder auch gleichzeitig in beiden Richtungen.

Der spezielle Koppelfeldaufbau kann natürlich auch bei einer 5- oder 7-stufigen Struktur beibehalten werden. Die mittlere Koppelstufe wird dann wiederum durch eine Clossche Koppelanordnung ersetzt. Hierdurch verringert sich bei einer großen Anzahl von Eingängen die Anzahl der erforderlichen Koppelpunkte beträchtlich.

Die Erfindung wird anhand eines Ausführungsbeispiels näher erläutert.

Es zeigen:

Figur 1 eine Koppeleinrichtung mit Clos-Struktur und

Figur 2 eine erfindungsgemäße Koppeleinrichtung.

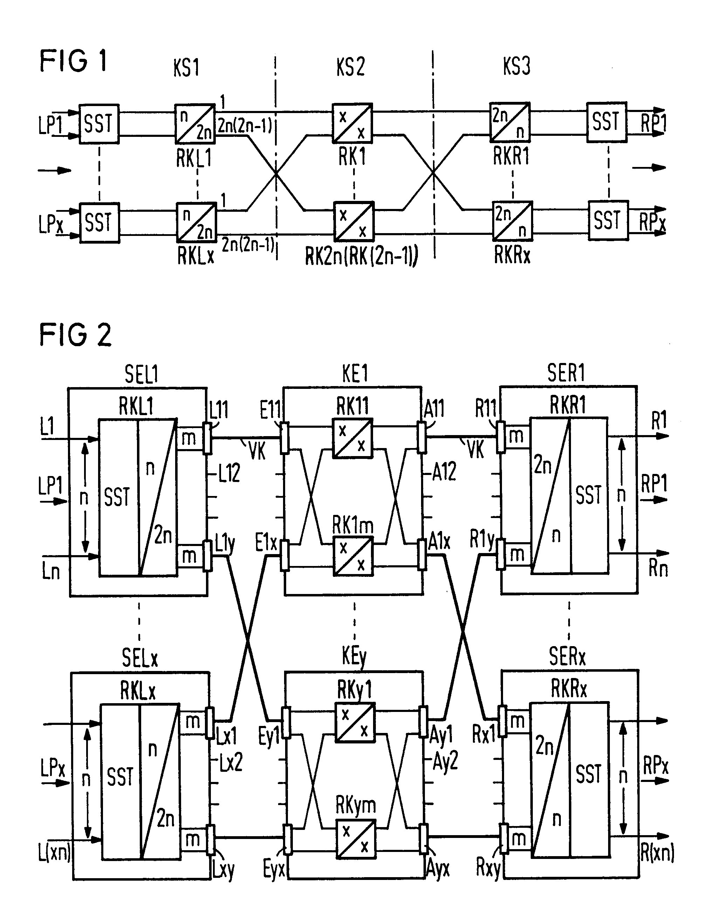

Bei der Koppeleinrichtung nach Figur 1 enthält die erste Koppelstufe KS1 die Anzahl von "x" n/2n-Raumkoppler RKL1-RKLx, an deren Eingänge jeweils n Leitungen über eine Schnittstellen-Baugruppe SST angeschaltet sind. Jeweils n Leitungen von insgesamt nx Leitungen sind zu einem Leitungsport LP1 bis LPx zusammengefaßt. Die Schnittstellen-Baugruppe dient zur elektrischen Anpassung der durchzuschaltenden Signale; sie kann darüber hinaus auch weitere Einrichtungen für einen Zeitmultiplexbetrieb beinhalten. Die Ausgänge der n/2n-

2

Raumkoppler sind über Zwischenleitungen mit Eingängen von "2n" x/x-Raumkopplern RK1-RK2n kanonisch verdrahtet. Die Ausgänge der x/x-Raumkoppler sind wiederum mit den Eingängen von 2n/n-Raumkopplern RKR1-RKRx der dritten Koppelstufe KS3 kanonisch verbunden, deren Ausgänge über Schnittstellen-Baugruppen SST mit Leitungsports RP1-RPx verbunden sind, die jeweils wieder n Anschlüsse aufweisen. Es wird hier angenommen, daß Signale von links nach rechts durchgeschaltet werden. Infolgedessen werden die linken Anschlüsse der Raumkoppler als Eingänge und die rechten Anschlüsse als Ausgänge bezeichnet. Bei Koppeleinrichtungen, die Signale nur in einer Richtung durchschalten, stimmt diese Bezeichnung mit der Richtung des Nachrichtenflusses überein. Dann ist die dargestellte Koppeleinrichtung für jede Übertragungsrichtung erforderlich.

Es sind jedoch auch Koppeleinrichtungen denkbar, bei denen über diesselben Koppelpunkte der Nachrichtenfluß in beiden Richtungen erfolgt. Dann sind die Bezeichnungen Eingänge und Ausgänge für die Raumkoppler nur als Lagebezeichnung für die Anschlüsse zu verstehen und der Datenfluß kann vom Ausgang der 2n/n-Raumkoppler über die als Eingänge bezeichneten Anschlüsse, die x/x-Raumkoppler und die n/2n-Raumkoppler erfolgen. Hierzu sind natürlich ebenfalls entsprechend modifizierte Schnittstellen-Baugruppen erforderlich.

Die in Figur 1 dargestellte Koppeleinrichtung unterscheidet sich von einer optimalen Closschen Koppelanordnung dadurch, daß die n/2n-Raumkoppler einen Ausgang mehr aufweisen und die 2n/n-Raumkoppler einen Eingang mehr aufweisen. Hierdurch ist auch ein x/x-Raumkoppler mehr erforderlich. Dafür ergeben sich jedoch häufig Vorteile bei der Steuerung des zugehörigen Vermittlerrechners. Prinzipiell können jedoch Raumkoppler entsprechend der Closschen Koppelanordnung verwendet werden.

Bei Koppeleinrichtungen mit einer großen Anzahl von Anschlußleitungen ergeben sich aufgrund der notwendigen kanonischen Verdrahtung zwischen den Raumkopplern aufwendige Verdrahtungsfelder mit einander überkreuzenden Einzelleitungen.

In Figur 2 ist eine Koppeleinrichtung dargestellt, bei der jeweils eine Schnittstellen-Baugruppe SST und ein n/2n-Raumkoppler zu einer Schnittstelleneinheit SEL1 bis SELx zusammengefaßt sind. Die Schnittstelleneinheiten SEL1-SELx bilden die erste Koppelstufe. Aus Gründen der Übersichtlichkeit ist nur die erste und letzte Schnittstelleneinheit dargestellt. Die an die erste Koppelstufe geführten Anschlußleitungen sind mit L1 bis L(xn) bezeichnet.

Die mittlere Koppelstufe besteht aus Koppeleinheiten KE1-KEy. Jede Koppeleinheit besteht aus "m" x/x-Raumkopplern.

Jede Koppeleinheit KE1 bis KEy weist "x" Koppler-Eingangsports auf, die jeweils m Anschlüsse haben. Der erste Koppler-Eingangsport E11 ist mit jedem ersten Eingang der x/x-Raumkoppler Rk11-RK1m verbunden. In derselben Weise sind die Ausgänge der x/x-Raumkoppler an die Ausgangsports A11-A1x angeschaltet. Die Ausgänge der ersten Schnittstelleneinheit SEL1 sind ebenfalls zu Schnittstellen-Ausgangsports L11-L1y, zusammengefaßt. Die übrigen Schnittstelleneinheiten sind identisch aufgebaut.

In der dritten Koppelstufe sind die 2n/n-Raumkoppler mit den entsprechenden Schnittstellen-Baugruppen ebenfalls zu Schnittstelleneinheiten SER1-SERx zusammengefaßt. Die Eingänge sind auch hier jeweils zu Datenports, bei der ersten Schnittstelleneinheit SE1R R11-R1y mit jeweils n Anschlüssen, zusammengefaßt. Die Anschlußleitungen sind entsprechend mit R1 bis R(xn) bezeichnet. Die Verdrahtung zwischen den Schnittstelleneinheiten und den Koppeleinheiten erfolgt durch Busleitungen, die zweckmäßigerweise als steckbares Kabel ausgeführt sind. So wird der erste Schnittstellen-Ausgangsport L11 mit dem ersten Koppler-Eingangsport E11 verbunden, der zweite Schnittstellen-Ausgangsport L12 mit dem ersten Koppler-Eingangsport der zweiten Koppeleinheit KE2 (nicht dargestellt) und der letzte Schnittstellen-Ausgangsport L1y der ersten Schnittstelleneinheit SEL1 mit dem ersten Koppler-Eingangsport Ey1 der letzten Koppeleinrichtung KEy. In derselben Weise werden die Schnittstellen-Ausgangsports der zweiten Schnittstelleneinrichtung mit jeweils jedem zweiten Koppler-Eingangsports verbunden und die Schnittstellen-Ausgangsports Lx1-Lxy der letzten Schnittstelleneinheit SELx mit allen letzten Koppler-Eingangsports E1x-Eyx der Koppeleinheiten KE1-KEy. Die Koppler-Ausgangsports A11-A1x der ersten Koppeleinheit KE1 sind in derselben Weise mit allen ersten Schnittstellen-Eingangsports R11-Rx1 der Schnittstelleneinheiten SER1-SERx der dritten Koppelstufe verbunden. Entsprechend sind die Koppler-Ausgangsports der weiteren Koppeleinheiten jeweils mit allen zweiten, dritten usw. Schnittstellen-Eingangsports verbunden. Die Zuordnung zwischen Schnittstellen-Ausgangsports und den Koppler-Eingangsports sowie den Koppler-Ausgangsports und dem Schnittstellen-Eingangsports sind natürlich im Prinzip beliebig vertauschbar; eine systematische Anordnung erleichtert natürlich den Aufbau und die Steuerung der Koppeleinrichtung. Die Koppeleinrichtung hat die Aufgabe, Eingangsleitungen L1-L(xn), die an den Eingangsports LP1-LPx der Schnittstelleneinheiten SEL1-SELx anliegen, wahlweise mit den Ausgangsleitungen R1-R(xn) zu verbinden. Die Leitungen können hierbei zweidrähtig ausgeführt sein. In der Regel erfolgt durch die Raumkoppler nur ein einpoliges Durchschalten. Die Signale werden in den Schnittstellen-Baugruppen zunächst umgesetzt. Durch die n/2n-Raumkoppler R KL1, .... kann jede Eingangsleitung mit zwei seiner Ausgänge verbunden werden, von denen dann letztlich einer über die Koppeleinheiten KE1-KEy und die Schnittstelleneinheiten SER1-SERx (zur gewünschten Ausgangsleitung R-R(xn)) durchgeschaltet wird. Die Ausgänge eines 2n/n-Raumkopplers bzw. die der nachgeschalteten Schnittstellen-Baugruppe bilden einen Ausgangsport RP1-RPx. Alle Koppeleinheiten wurden gleich ausgeführt. Natürlich ist es auch möglich, bei Verwendung der Closschen Originalkoppelanordnung, ohne Nachteile, beispielsweise auf dem letzten x/x-Raumkoppler RKym zu verzichten und ebenfalls auf jeweils eine Zwischenleitung in einer Schnittstelleneinheit zu verzichten bzw. die entsprechende Verdrahtung nicht durchzuführen. Die Bezeichnung für die n/2n-Raumkoppler und die 2n/n-Raumkoppler beinhaltet hier ebenfalls Raumkoppler, die einen Ausgang bzw. einen Eingang weniger aufweisen. Aus Gründen des einheitlichen Aufbaus und der Möglichkeit der Übertragung von Testsignalen wurde jedoch der beschriebene Aufbau gewählt.

Es ist zweckmäßig, alle Raumkoppler aus x/x-Kopplern aufzubauen, die 32 Eingänge und 32 Ausgänge aufweisen. Für das Verbindungskabel hat sich die Anzahl von 8 Leitungen bewährt, wenn die Signale 2-drähtig übertragen werden. Der Zusammenhang zwischen der Anzahl der Eingangsleitungen je Schnittstelleneinheit, der Anzahl der Schnittstellen-Ausgangsports und der Anzahl der Koppeleinheiten ist gegeben durch y . m = 2n. Die Anzahl der Ein und Ausgänge der x/x-Raumkoppler entspricht der Anzahl der Schnittstelleneinheiten einer Koppelstufe.

Da es zur Zeit noch nicht möglich ist, x/x-Raumkoppler mit einer größeren Anzahl von Ein- und Ausgängen zu integrieren, werden Raumkoppler mit einer größeren Anzahl von Ein- und Ausgängen durch "Quadrieren" geschaffen. Eine Verdopplung der Ein-und Ausgänge erreicht man beispielsweise, indem man vier x/x-Raumkoppler paarweise zusammenschaltet, indem die Ausgänge jeweils eines Paares parallel geschaltet werden und die einander entsprechenden Eingänge jedes Paares parallel geschaltet werden. Durch die Steuerung ist es dadurch möglich, alle Eingänge mit allen Ausgängen zu verbinden, wobei natürlich der jeweils parallel geschaltete Ausgang offen bzw. hochohmig sein muß. Derselbe Effekt kann durch Parallelschalten der Eingänge eines Raumkopplerpaares und Auskreuzen der Ausgänge erzielt werden.

Für Koppelfelder einer größeren Anzahl von Eingängen können fünf oder mehrstufige Clossche

Koppelanordnungen verwendet werden. Der Mittelteil entspricht hierbei der in Figur 2 dargestellten Anordnung, die durch zwei weitere Koppelstufen mit n/n-Raumkopplern ergänzt wird, an welchen die Eingangs- bzw. Ausgangsleitungen eingeschlossen werden. Der Aufwand steigt bei dieser Struktur mit der Anzahl der Ein- und Ausgangsleitungen ungefähr linear an.

## Patentansprüche

1. Mehrstufige Koppeleinrichtung zum blockierungsfreien Verbinden von nx Eingangsleitungen mit nx Ausgangsleitungen, mit einer ersten Koppelfeldstufe (KS1), die n/2n-Raumkoppler (RKL1-RKLx), aufweist, mit einer mittleren Koppelfeldstufe (KS2), die x/x-Raumkoppler (RK1-RK2n) aufweist, wobei jeweils ein Ausgang eines n/2n-Raumkopplers (RKL1-RKLx) durch eine Zwischenleitung mit einem Eingang eines x/x-Raumkopplers (RK1-RK2n) verbunden ist, und mit einer dritten Koppelfeldstufe (KS3), die 2n/n-Raumkoppler (RKR1-RKRx) aufweist, wobei jeweils ein Ausgang eines x/x-Raumkopplers (RK1-RK2n) durch eine Zwischenleitung mit einem Eingang eines 2n/n-Raumkopplers (RKR1-RKRx) verbunden ist,
**dadurch gekennzeichnet,**
daß jeweils "m" Ausgänge eines n/2n-Raumkopplers (RKL1-RKLx) zu einem Schnittstellen-Ausgangsport (L11-L1y,....Lxy) zusammengefaßt sind,
daß jeweils "m" x/x-Raumkoppler (RK11-RK1m,...) zu einer Koppeleinheit (KE1,....KEy) zusammengefaßt sind,
daß jeweils ein Eingang jedes x/x-Raumkopplers (RK11-RK1m,....) einer Koppeleinheit (KE1,...KEy ) auf einen Koppler-Eingangsport (E11-E1x,...) geführt ist,
daß jeweils ein Schnittstellen-Ausgangsport (L11-L1y,...Lxy) eines n/2n-Raumkopplers (RKL1,...) mit jeweils einem Koppler-Eingangsport (E11-Ey1,...Eyx) jeder Koppeleinheit (KE1-KEy) verbunden ist,
daß jeweils ein Ausgang jedes x/x-Raumkopplers (RK11-Rk1m,...) einer Koppeleinheit (KE1,...) auf einen Koppler-Ausgangsport (A11-A1x,...) geführt ist,
daß je "m" Eingänge jedes 2n/n-Raumkopplers (RKR1,...) zu Schnittstellen-Eingangsports (R11-R1y,...Rxy) zusammengefaßt sind,
daß jeweils ein Koppler-Ausgangsport (A11-A1x,...Ayx) einer jeden Koppeleinheit (KE1,...,KEy) mit jeweils einem Schnittstellen-Eingangsport (R11-Rx1....Rxy) eines jeden 2n/n-Raumkopplers (RKR1-RKRx) verbunden ist und
daß jeweils "m" Zwischenleitungen zu einem Bus oder einem Verbindungskabel (VK) zusammengefaßt sind.

**2.** Koppeleinrichtung nach Anspruch 1,
**dadurch gekennzeichnet,**
daß jeweils ein n/2n-Raumkoppler (RKL1-RKLx) oder 2n/n-Raumkoppler (RKR1-RKRx) mit einer zugehörigen Schnittstellen-Baugruppe (SST), die der Anpassung zwischen den Signalen auf den Anschlußleitungen (L1-L(xn); R1-R(xn) dient, zu einer Schnittstelleneinheit (SEL1 bis SELx; SER1 bis SERx) zusammengefaßt ist.

**3.** Koppeleinrichtung nach Anspruch 1 oder 2,
**dadurch gekennzeichnet,**
daß das Verbindungskabel mit Steckvorrichtungen versehen ist.

**4.** Koppeleinrichtung nach einem der vorhergehenden Ansprüche,
**dadurch gekennzeichnet,**
daß durch Quadrierung der x/x-Raumkoppler (RK1) Raumkoppler mit einer größeren Anzahl von Ein- und Ausgängen und damit Koppeleinrichtungen für eine größere Anzahl von Ein- und Ausgangsleitungen erzeugt werden.

**5.** Koppeleinrichtung nach einem der vorhergehenden Ansprüche 1 bis 4,
**dadurch gekennzeichnet,**
daß die dreistufige Koppeleinrichtung als die mittleren Koppelstufen (KS1 ,KS2 ,KS3) einer mehrstufigen, insbesondere fünf- oder siebenstufigen, Koppeleinrichtung vorgesehen ist.

**6.** Koppeleinrichtung nach einem der vorhergehenden Ansprüche,
**dadurch gekennzeichnet,**
daß jeweils m = 8 Verbindungsleitungen zu einem Verbindungskabel (VK) zusammengefaßt sind.

**7.** Koppeleinrichtung nach einem der vorhergehenden Ansprüche,
**dadurch gekennzeichnet,**
daß x/x-Raumkoppler mit x = 32, 64 oder 128 Eingängen und x = 32, 64 oder 128 Ausgängen vorgesehen sind.

## Claims

**1.** Multi-stage switching apparatus for non-blocking connection of nx input lines to nx output lines, having a first switching network stage (KS1) which has n/2n space-division couplers (RKL1-RKLx), having an intermediate switching network stage (KS2) which has x/x space-division couplers (RK1-Rk2n), in which one output of an n/2n space-division coupler (RKL1-RKLx) is connected to one input of an x/x space-division coupler (RK1-RK2n) by means of an intermediate line in each case, and having a third switching network stage (KS3) which has 2n/n space-division couplers (RKR1-RKRx), in which one output of an x/x space-division coupler (RK1-RK2n) is connected to one input of a 2n/n space-division coupler (RKR1-RXRx) by means of an intermediate line in each case, characterized in that in each case "m" outputs of an n/2n space-division coupler (RKL1-RKLx) are combined to form an interface output port (L11-L1y,....Lxy),
in that in each case "m" x/x space-division couplers (RK11-RK1m,...) are combined to form a switching matrix (KE1,....KEy),
in that in each case one input of each x/x space-division coupler (RK11-RK1m,....) of a switching matrix (KE1,...KEy) is connected to a coupler input port (E11-E1x,...),
in that in each case one interface output port (L11-L1y,...Lxy) of an n/2n space-division coupler (RKL1,...) is connected in each case to a coupler input port (E11-Ey1,...Eyx) of each switching matrix (KE1-KEy),
in that in each case one output of each x/x space-division coupler (RK11-RK1m),...) of a switching matrix (KE1,...) is connected to a coupler output port (A11-A1x,...),
in that in each case "m" inputs of each 2n/n space-division coupler (RKR1,...) are combined to form interface input ports (R11-R1y,...Rxy),
in that in each case one coupler output port (A11-A1x,...Ayx) of each switching matrix (KE1,...,KEy) is connected to in each case one interface input port (R11-Rx1....Rxy) of each 2n/n space-division coupler (RKR1-RKRx), and in that in each case "m" intermediate lines are combined to form a bus or a connecting cable (VK).

**2.** Switching apparatus according to Claim 1, characterized in that in each case one n/2n space-division coupler (RKL1-RKLx) or 2n/n space-division coupler (RKR1-RKRx) is combined with an associated interface module (SST) serving to match the signals on the connection lines (L1-L(xn); R1-R(xn)) to form an interface unit (SEL1 to SELx; SER1 to SERx).

**3.** Switching apparatus according to Claim 1 or 2, characterized in that the connecting cable is provided with plug means.

**4.** Switching apparatus according to one of the preceding claims, characterized in that space-division couplers having a greater number of inputs and outputs and hence switching apparatuses for a greater number of input and output lines are produced by squaring the x/x space-division couplers (RK1).

**5.** Switching apparatus according to one of the preceding Claims 1 to 4, characterized in that the three-stage switching apparatus is provided as the intermediate switching matrix stages (KS1, KS2, KS3) of a multi-stage, preferably five-stage or seven-stage, switching apparatus.

**6.** Switching apparatus according to one of the preceding claims, characterized in that in each case m = 8 connection lines are combined to form a connecting cable (VK).

**7.** Switching apparatus according to one of the preceding claims, characterized in that x/x space-division couplers with x = 32, 64 or 128 inputs and x = 32, 64 or 128 outputs are provided.

**Revendications**

**1.** Dispositif de couplage à plusieurs étages servant à réunir, sans blocage, nx lignes d'entrée et nx lignes de sortie, comprenant un premier étage de champ de couplage (KS), qui comporte des coupleurs spatiaux n/2n (RKL1-RKLx), un étage médian (KS2), qui comporte des coupleurs spatiaux x/x (RK1-RK2n), respectivement une sortie d'un coupleur spatial n/n (RKL1-RKLx) étant reliée par une ligne intermédiaire à une entrée d'un coupleur spatial x/x (RK1-RK2n), et un troisième étage (KS3) qui comporte des coupleurs spatiaux 2n/n, respectivement une sortie d'un coupleur spatial x/x (RK1-RK2n) étant reliée par une ligne intermédiaire à une entrée d'un coupleur spatial 2n/n (RKR1-RKRx), caractérisé par le fait
que respectivement "m" sorties d'un coupleur spatial n/2n (RKL1-RKLx) sont réunies pour former un port de sortie d'interface (L11-L1y, ... Lxy),
que respectivement "m" coupleurs spatiaux x/x (RK11-RK1m,...) sont réunis pour former une unité de couplage (KE1, ... KEy), que respectivement une entrée de chaque coupleur spatial x/x (RK11-RK1m,...) d'une unité de couplage (KE1,...KEy) est raccordée à un port d'entrée de coupleur (E11-E1x,...),
que respectivement un port de sortie d'interface (L11-L1y, ...Lxy) d'un coupleur spatial n/2n (RKL1,...) est relié respectivement à un port d'entrée de coupleur (E11-Ey1,...Eyx) de chaque unité de couplage (KE1-KEy),
que respectivement une sortie de chaque coupleur spatial x/x (RK11-RK1m,...) de l'unité de couplage (KE1,...) est raccordée à un port de sortie de coupleur (A11-A1x,...),
que respectivement "m" entrées de chaque coupleur spatial 2n/n (RKR1,...) sont réunies pour former des ports d'entrée d'interface (R11-R1y,...Rxy),
que respectivement un port de sortie de coupleur (A11-A1x,... Ayx) de chaque unité de couplage (KE1,...,KEy) est raccordé à respectivement un port d'entrée d'interface (R11-Rx1...Rxy) de chaque coupleur spatial 2n/n (RKR1-RKRx), et
que respectivement "m" lignes intermédiaires sont réunies pour former un bus ou un câble de jonction (VK).

**2.** Dispositif de couplage suivant la revendication 1, caractérisé par le fait que respectivement un coupleur n/2n (RKL1-RKLx) ou un coupleur spatial 2n/n (RKR1-RKRx) est réuni à un module d'interface associé (SST), qui est utilisé pour l'adaptation entre les signaux présents dans les lignes de raccordement (L1-L(xn); R1-R(xn)), pour former une unité d'interface (SEL1 à SELx; SER1 à SERx).

**3.** Dispositif de couplage suivant la revendication 1 ou 2, caractérisé par le fait que le câble de jonction est équipé de dispositifs d'enfichage.

**4.** Dispositif de couplage suivant l'une des revendications précédentes, cractérisé par le fait qu'en élevant au carré le nombre des coupleurs spatiaux x/x (RK1), on forme des coupleurs spatiaux possédant un nombre accru d'entrées et de sorties et par conséquent des dispositifs de couplage possédant un nombre accru de lignes d'entrée et de sortie.

**5.** Dispositif de couplage suivant l'une des revendications précédentes 1 à 4, caractérisé par le fait que le dispositif de couplage à trois étages est prévu de manière à constituer les étages de couplage médians (KS1,KS2,KS3) d'un dispositif de couplage à plusieurs étages, notamment à cinq ou à sept étages.

**6.** Dispositif de couplage suivant l'une des revendications précédentes, caractérisé par le fait que respectivement m = 8 lignes de jonction sont réunies pour former un câble de jonction (VK).

7. Dispositif de couplage suivant l'une des revendications précédentes, caractérisé par le fait qu'il est prévu des coupleurs spatiaux x/x comportant x = 32, 64 ou 128 entrées et x = 32, 64 ou 128 sorties.

FIG 1

FIG 2